# EUROPÄISCHE PATENTSCHRIFT

(11) **EP 3 571 035 B1**
(45) Veröffentlichungstag und Bekanntmachung des Hinweises auf die Patenterteilung: **05.05.2021**
(21) Anmeldenummer: 18789596.6
(22) Anmeldetag: 17.10.2018
(51) Int. Cl.: B29C 49/42, B29C 49/06, B29C 49/36, B29C 49/64, B29L 31/00

(54) **SCHNELLWECHSELDORN MIT AKTIVER PREFORMKLEMMUNG**
QUICK-CHANGE MANDREL HAVING ACTIVE PREFORM CLAMPING
MANDRIN À CHANGEMENT RAPIDE INTÉGRANT UN SERRAGE ACTIF DE PRÉFORME

(30) Priorität: 17.10.2017 DE 102017124186
(43) Veröffentlichungstag der Anmeldung: 27.11.2019
(73) Patentinhaber: KHS Corpoplast GmbH, 22145 Hamburg (DE)
(72) Erfinder: GERHARDS, Martin, 22089 Hamburg (DE); KLATT, Dieter, 22147 Hamburg (DE); JACOBSEN, Alexander, 22305 Hamburg (DE); LINKE, Michael, 22159 Hamburg (DE)
(74) Vertreter: Eisenführ Speiser
(86) Internationale Anmeldenummer: PCT/EP2018/078366
(87) Internationale Veröffentlichungsnummer: WO 2019/076962

(56) Entgegenhaltungen:
- DE-A1-102007 037 400
- US-A- 4 572 355
- US-A1- 2010 310 705
- US-A1- 2014 161 924

## Beschreibung

Die Erfindung betrifft ein Transportsystem zum Transport von Vorformlingen in einer Vorrichtung zur blasformenden Herstellung von Fertigbehältern, wobei das Transportsystem eine Transportkette umfasst, deren Kettenglieder ein Tragelement und ein Transportelement umfassen. Darüber hinaus betrifft die Erfindung eine Vorrichtung zur blasformenden Herstellung von Fertigbehältern aus Vorformlingen, sowie eine Verwendung des Transportsystems und ein Verfahren zum Auswechseln von mindestens einem Tragelement des Transportsystems.

Zum Verpacken von flüssigen Lebensmitteln und Getränken werden in der Regel Behälter, wie z. B. Flaschen aus Glas oder Kunststoff, verwendet, die in einem Herstellungsprozess an verschiedenen Vorrichtungen erstellt und anschließend an einer weiteren Vorrichtung befüllt werden. Beispielhaft sei hier das Herstellen von Behältern aus Kunststoff in einer Blasvorrichtung genannt. Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird und gegebenenfalls einer zusätzlichen Streckung. Der verfahrenstechnische Ablauf bei einer derartigen Expansion des Vorformlings wird zum Beispiel in der DE-OS 43 40 291 erläutert. Die Einleitung des unter Druck stehenden Gases umfasst auch die Druckgaseinleitung in die sich entwickelnde Behälterblase sowie die Druckgaseinleitung in den Vorformling zu Beginn des Blasvorganges. Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Während der Herstellungs- und Füllprozesse ist es notwendig, die Behälter zu transportieren und zwischen den einzelnen Prozessstufen von einer Station an die andere zu übergeben. Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden.

Eine beispielhafte Vorrichtung mit Transportdornen zum Transport der Vorformlinge und Behälter ist aus der EP 2 753 465 A1 bzw. US 2014/161924 A1 bekannt. Die Blaseinrichtung umfasst mehrere auf einem rotierbaren Blasrad angeordnete Blasstationen zur Umformung der Vorformlinge in die Fertigbehälter, sowie Haltevorrichtungen zum Halten und zum Transport der Vorformlinge. Die in der EP 2 753 465 A1 gezeigten Haltevorrichtungen weisen im Bereich ihres in einen Mündungsabschnitt des Vorformlings einführbaren Kopfes mehrere, nämlich mindestens zwei positionierbare Klemmelemente auf, die mindestens bereichsweise gerundet ausgebildet sind und die entlang eines Außenumfanges des Kopfes relativ zueinander mit einem Abstand angeordnet sind, die also umfangsbeabstandet zueinander angeordnet sind. Mindestens eines der Klemmelemente ist in einer bezüglich einer Längsachse der Haltevorrichtung seitlich am Kopf angeordneten Vertiefung positioniert, wobei die Vertiefung schräg zur Längsachse verlaufende obere und untere Gleitflächen zur Beaufschlagung des Klemmelementes aufweist und wobei der Kopf ein mit der unteren Gleitfläche versehenes Kopfunterteil und ein mit der oberen Gleitfläche versehenes Kopfoberteil aufweist. Der Vorformling ist dabei im Bereich seines Mündungsabschnittes im Wesentlichen mit einer zylindrischen Innenoberfläche ausgebildet. Geeignete weitere Klemmelemente zum Transport von Vorformlingen werden z. B. in DE 10 2005 011 805 A1 und DE 10 2008 023 701 A1 beschrieben.

Die für einen Transport der Vorformlinge verwendeten Transportdorne müssen regelmäßig ausgetauscht werden, zum Beispiel zum Umstellen der Vorrichtung zur blasformenden Herstellung von Fertigbehältern auf eine andere Art von Vorformling oder zum Austausch verschlissener oder verunreinigter Teile. Der Austausch der Transportdorne ist relativ aufwendig und muss manuell durchgeführt werden. DE 10 2007 037400 A1 und US 2010/310705 A1 beschreiben Transportdornen in denen ein Kopfteil von einem Schaftteil gelöst wird, indem man von unten ein Betätigungselement anhebt. Um den für die Auswechslung der Transportdorne notwendigen Arbeitsaufwand zu reduzieren, wäre ein stabiles Transportsystem mit maschinell austauschbaren Transportdornen für Vorformlinge wünschenswert, das trotz einer stabilen Halterung der Vorformlinge einen schnellen Wechsel der Transportdorne ermöglicht.

Aufgabe der vorliegenden Erfindung ist es somit, eine Vorrichtung der einleitend genannten Art derart zu konstruieren, dass ein zuverlässiger Transport der Vorformlinge bei hoher Transportgeschwindigkeit unterstützt wird und zusätzlich eine schnelle Austauschbarkeit der Transportdornen gewährleistet ist.

### Beschreibung

Diese Aufgabe wird erfindungsgemäß dadurch gelöst, dass die Transportdorne, die hierin als Transportelemente bezeichnet werden, zweiteilig ausgebildet werden, wobei der Vorformling lösbar an einem Kopfteil des Transportdorns und das Kopfteil des Transportdorns lösbar an einem Schaftteil des Transportdorns gehalten wird. Das Kopfteil kann dabei von dem Schaftteil gelöst werden, indem ein in dem von dem Kopfteil abgewandten Endbereich des Schaftteils angeordneter Mechanismus betätigt wird. Das lösbare Halten sowohl des Vorformlings an dem Kopfteil des Transportdorns als auch des Kopfteils an dem Schaftteil kann dabei durch Klemmelemente oder auf andere Weise erfolgen.

Die erfindungsgemäßen Transportelemente haben den Vorteil, dass die verwendeten Kopfteile schnell und zuverlässig austauschbar sind. Da das Kopfteil von dem anderen Ende des Schaftteils her gelöst werden kann, kann das Kopfteil nicht nur manuell, sondern auch unkompliziert automatisiert gelöst werden. Auf diese Weise kann das Transportsystem durch Auswechseln des Kopfteils schnell an eine andere Klasse von Vorformlingen, z. B. Vorformlinge mit einem anderen Mündungsdurchmesser, angepasst werden. Bei Verwendung von Klemmelementen als Befestigung wird darüber hinaus ein besonders zuverlässiger und fester Halt bereitgestellt und dadurch eine hohe Transportgeschwindigkeit unterstützt.

Die Erfindung betrifft daher in einem ersten Aspekt ein Transportsystem zum Transport von Vorformlingen in einer Vorrichtung zur blasformenden Herstellung von

Fertigbehältern, wobei das Transportsystem eine Transportkette umfasst, deren Kettenglieder ein Tragelement zum Transport der Vorformlinge aufweisen, wobei das

Tragelement ein Schaftteil und ein Kopfteil umfasst, und das Kopfteil einen in den Mündungsabschnitt des Vorformlings einführbaren Kopfendbereich aufweist, dadurch gekennzeichnet, dass das Kopfteil an dem Schaftteil gehalten ist und mittels Betätigung eines ersten Betätigungselementes von dem Schaftteil lösbar ist, wobei das erste Betätigungselement in dem von dem Kopfteil abgewandten Endbereich des Schaftteils angeordnet ist. Der Vorformling kann mittels Betätigung eines zweiten Betätigungselements von dem Kopfteil lösbar sein, wobei das zweite Betätigungselement in dem von dem Kopfteil abgewandten Endbereich des Schaftteils angeordnet ist und/oder von dem ersten Betätigungselement betätigbar ist.

Das Kopfteil kann dabei mittels der Rückstellkraft einer Schaftteil-Feder an dem Schaftteil gehalten werden. Diese Schaftteil-Feder ist in oder an dem Schaftteil angeordnet, vorzugsweise in dem Endbereich des Schaftteils, der dem das Kopfteil haltenden Ende gegenüberliegt. Die Rückstellkraft der Feder wirkt vorzugsweise entlang der Längsachse des Schaftteils. Der Vorformling kann in ähnlicher Weise mittels der Rückstellkraft einer Kopfteil-Feder an dem Kopfteil gehalten werden.

Somit wird die erfindungsgemäße Aufgabe mit anderen Worten dadurch gelöst, dass das Kopfteil und das Schaftteil von mindestens einer Feder relativ zueinander verspannt sind, die das Schaftteil in einem dem Kopfteil abgewandten Bereich beaufschlagt und darüber hinaus das Kopfteil und ein Vorformling oder Behälter von mindestens einer weiteren Feder relativ zueinander verspannt sind, die das Kopfteil beaufschlagt.

Die Rückstellkraft der Schaftteil-Feder kann z. B. Klemmelemente beaufschlagen, die geeignet sind, das Kopfteil am Schaftteil zu halten. So kann das Schaftteil in einem in den Mündungsabschnitt des Kopfteils einführbaren Schaftendbereich mindestens zwei positionierbare, gerundet ausgebildete Schaftklemmelemente aufweisen, die entlang eines Außenumfangs des Schaftendbereichs relativ zueinander mit einem Abstand angeordnet sind und mittels Betätigung des ersten Betätigungselements radial aus der Längsachse des Tragelementes verschiebbar sind.

Die Rückstellkraft der Kopfteil-Feder kann z. B. Klemmelemente beaufschlagen, die geeignet sind, den Vorformling am Kopfteil zu halten. So kann das Kopfteil in einem in den Mündungsabschnitt des Vorformlings einführbaren Kopfendbereich mindestens zwei positionierbare, gerundet ausgebildete Kopfklemmelemente aufweisen, die entlang eines Außenumfangs des Kopfendbereichs relativ zueinander mit einem Abstand angeordnet sind und mittels Betätigung eines zweiten Betätigungselements radial aus der Längsachse des Tragelements verschiebbar sind.

Die Klemmelemente können jeweils seitlich in Vertiefungen angeordnet sein, die Gleitflächen aufweisen, an denen das jeweilige Klemmelement durch Krafteinwirkung (z. B. der Wirkung der Rückstellkraft einer Feder) reversibel nach außen verschoben werden kann. Durch diese Verschiebung der Klemmelemente wird der Außenumfang des Kopfteils bzw. des Schaftteils derart vergrößert, dass ein Druck auf die Innenwand des Vorformlings bzw. des Kopfteils ausgeübt und der Vorformling bzw. das Kopfteil sicher gehalten wird.

Somit kann mindestens eines der Schaftklemmelemente in einer bezüglich einer Längsachse des Tragelementes seitlich am Schaftteil angeordneten Vertiefung positioniert sein, wobei die Vertiefung schräg zur Längsachse verlaufende obere und untere Gleitflächen zur Beaufschlagung des Schaftklemmelementes aufweist und wobei das Schaftteil ein mit der oberen Gleitfläche versehenes Schaftendbereichoberteil und ein mit der unteren Gleitfläche versehenes Schaftinnenteil aufweist, wobei das Schaftendbereichoberteil und das Schaftinnenteil von mindestens einer Schaftteil-Feder relativ zueinander verspannt sind, die das Schaftinnenteil beaufschlagt.

In ähnlicher Weise kann mindestens eines der Kopfklemmelemente in einer bezüglich einer Längsachse des Tragelementes seitlich am Kopfteil angeordneten Vertiefung positioniert sein, wobei die Vertiefung schräg zur Längsachse verlaufende obere und untere Gleitflächen zur Beaufschlagung des Kopfklemmelementes aufweist und wobei das Kopfteil ein mit der oberen Gleitfläche versehenes Kopfoberteil und ein mit der unteren Gleitfläche versehenes Kopfinnenteil aufweist, wobei das Kopfoberteil und das Kopfinnenteil von mindestens einer Kopfteil-Feder relativ zueinander verspannt sind, die das Kopfinnenteil beaufschlagt.

Durch die Beaufschlagung der dem Kopfteil abgewandten Oberseite des Schaftteils mit der Feder, vorzugsweise einer Druckfeder, erfolgt bei einem Aufschieben des Mündungsabschnittes eines Kopfteils auf den Schaftendbereich eine Beaufschlagung der aus den Vertiefungen des Schaftendbereichs herausragenden Schaftklemmelemente derart, dass diese in Richtung auf das dem Kopfteil gegenüberliegende Ende des Schaftteils und/oder in Richtung des Inneren des Schaftteils verschoben werden. Das "Innere" des Schaftteils ist erfindungsgemäß in Richtung der Mittelachse des Tragelements bzw. des Schaftteils, d. h. z. B. aus Richtung des Außenumfangs des Schaftteils in Richtung der Mittelachse des Schaftteils. Die Schaftklemmelemente übertragen hierbei die in Richtung der Längsachse des Tragelements wirkenden Kräfte auf das Kopfteil und halten dieses durch den ausgeübten Innendruck fest. "Innendruck" im Sinne der Erfindung ist ein aus dem Inneren ausgeübter Klemmdruck, z. B. ein Druck der aus Richtung der Längsachse des Tragelements in Richtung des Außenumfangs des Tragelements, Schaftteils und/oder Kopfteils ausgeübt wird.

Durch die Beaufschlagung des Kopfteils mit einer weiteren Feder, vorzugsweise einer Druckfeder, erfolgt bei einem Aufschieben des Mündungsabschnittes eines Vorformlings oder eines Behälters auf das Kopfteil eine Beaufschlagung der aus den Vertiefungen des Kopfteils herausragenden Kopfklemmelemente derart, dass diese in Richtung zum Kopfoberteil und/oder in Richtung des Inneren des Kopfteils verschoben werden. Das "Innere" des Kopfteils ist erfindungsgemäß in Richtung der Mittelachse des Tragelements. Die Kopfklemmelemente übertragen hierbei die in Richtung der Längsachse des Tragelements wirkenden Kräfte auf den Mündungsabschnitt des Vorformlings oder Behälters und halten diesen durch den ausgeübten Innendruck bzw. Klemmdruck fest.

Eine Anordnung der Schaftteil-Feder derart, dass das Schaftteil in einem dem Kopfteil abgewandten Bereich von der Feder beaufschlagt wird, ermöglicht es insbesondere, die Feder in einem Bereich außerhalb des Mündungsabschnittes des Vorformlings zu positionieren. Hierdurch wird die Feder in einem Bereich angeordnet, der zum einen ausreichend groß zur Aufnahme der Feder ist, sodass die Verwendung der Feder nicht zu einer unnötig komplizierten Geometrie des Kopfteils führt. Darüber hinaus erfolgt die Anordnung der Schaftteil-Feder in einem Bereich der typischerweise bei einer Beheizung der Vorformlinge nicht von Heizstrahlung beaufschlagt wird.

Die Anordnung der Kopfteil-Feder derart, dass das Kopfinnenteil in seinem Inneren von der Feder beaufschlagt wird, ermöglicht darüber hinaus eine platzsparende Unterbringung dieser Feder.

Gegenüber einer direkten Beaufschlagung der Schaft- und Kopfklemmelemente durch eines oder mehrere federnde Elemente besitzt diese Konstruktion somit sowohl hinsichtlich der Erreichung einer kompakten und übersichtlich strukturierten Konstruktion als auch hinsichtlich einer Bereitstellung einer dauerhaft hochwertigen Funktion erhebliche Vorteile.

Gemäß einer üblichen Verwendung ist der Kopfendbereich des Kopfteils vollständig in den Mündungsabschnitt des Vorformlings bzw. des Behälters eingeführt und/oder der Schaftendbereich des Schaftteils ist vollständig in das Kopfteil eingeführt. Das Kopfoberteil ragt im Bereich seiner dem Kopfendbereich abgewandten Ausdehnung aus dem Mündungsabschnitt des Vorformlings heraus. Das Schaftteil ragt im Bereich seiner dem Schaftendbereich abgewandten Ausdehnung aus dem Mündungsabschnitt des Kopfteils heraus.

Das Kopfteil und der Vorformling oder Behälter weisen somit jeweils an einer Seite einen Mündungsabschnitt auf. Eine Mündung im Sinne der Erfindung ist eine Vertiefung bzw. Einbuchtung. Vorzugsweise weist die Mündung eine im Wesentlichen zylindrische Form auf. Jedenfalls ist die Mündung derart ausgebildet, dass ihr Gegenstück (d. h. der Endbereich des Schaftteils bzw. der Kopfendbereich) in die Mündung hineinpasst. Vorzugsweise ist nach dem Einführen des Gegenstücks in die Mündung das Gegenstück von der Mündung bzw. dem die Mündung umfassenden Teil angrenzend umgeben. An der dem Mündungsabschnitt gegenüberliegenden Seite sind das Kopfteil und der Vorformling bzw. Behälter vorzugsweise geschlossen.

Die Längsachse des Tragelements ist bevorzugt die Mittelachse des Schaftteils oder alternativ eine zu dieser Mittelachse parallele Achse.

Das Schaftinnenteil kann eine Endfläche zur Beaufschlagung des Kopfinnenteils aufweisen. Die Endfläche kann eben oder uneben sein und z. B. eine dem Kopfinnenteil angepasste Form aufweisen.

Das Schaftinnenteil kann sich durch die Schaftteil-Feder hindurcherstrecken. Die Schaftteil-Feder stützt sich vorzugsweise an einem Vorsprung des Schaftteils ab. Hierdurch kann die federnde Verspannung des Schaftteils relativ zum Kopfteil realisiert werden. Gemäß einer Konstruktionsvariante ist daran gedacht, dass der Vorsprung durch einen Absatz ausgebildet ist.

Die Kopfteil-Feder erstreckt sich vorzugsweise im Inneren des Kopfinnenteils. Die Kopfteil-Feder stützt sich vorzugsweise im Inneren des Kopfinnenteils an einer Endplatte ab. Die Endplatte kann ebenso wie die Endfläche des Schaftinnenteils eben oder uneben sein und z. B. eine der Kopfteil-Feder angepasst Form aufweisen.

Eine preiswerte Konstruktion wird dadurch unterstützt, dass das Schaftteil aus einem Schaftinnenteil, das zum Beispiel stab- oder stößelförmig ausgebildet ist und/oder einen Schaftstab und ein diesen mindestens bereichsweise umgebendes Schaftinnenrohr umfasst, und einem das Schaftinnenteil mindestens bereichsweise umgebendes Rohr ausgebildet ist.

Das Schaftinnenteil umfasst in einer Ausführungsform einen Schaftstab und ein den Schaftstab wenigstens bereichsweise umgebendes Schaftinnenrohr. Auf diese Weise können die Schaftklemmelemente, die den Kopfteil halten, von den Kopfklemmelementen getrennt gelöst und gespannt werden. Dies bietet den weiteren Vorteil einer noch festeren Halterung des Kopfteils nachdem der Vorformling von dem Tragelement entnommen wurde. Anders gesagt kann, indem z. B. ein Schaftteil in Stößelform durch ein Schaftteil in Rohrform (Schaftinnenrohr) mit einem innenliegenden Schaftteil in Stab- bzw. Stößelform (Schaftstab) ersetzt wird, ein weiteres federvorgespanntes Halteelement ergänzt werden, das den Vorformling aktiv spannt und entspannt, um den Vorformling kraftfrei von dem Tragelement aufstecken und abziehen zu können. Das zweite Klemmelement wird in dieser Ausführungsform durch einen im Schaftinnenrohr liegenden Schaftstab, der Stößelform aufweisen kann, betätigt. Das Schaftinnenrohr kann somit die untere Gleitfläche zur Beaufschlagung des Schaftklemmelementes aufweisen. Ebenso kann der Schaftstab erfindungsgemäß die Endfläche zur Beaufschlagung des Kopfinnenteils aufweisen.

Die Schaftklemmelemente und Kopfklemmelemente werden hierin jeweils auch als Klemmelemente bezeichnet. Eine vorteilhafte Übertragung von Klemmkräften wird dadurch erreicht, dass das Klemmelement kugelförmig oder wenigstens bereichsweise zylindrisch ausgebildet ist und in letzterem Fall im Bereich seiner in Richtung der Tragelement-Längsachse weisenden Endbereiche Verjüngungen aufweist. Für eine Positionierung dieser Klemmelemente erweist es sich als vorteilhaft, dass die Verjüngungen kegelstumpfartig ausgebildet sind. In diesem Fall kann eine flächige Kraftübertragung dadurch erreicht werden, dass die Verjüngungen relativ zur Elementlängsachse Neigungswinkel aufweisen, die den Neigungswinkeln der Gleitflächen entsprechen. Erfindungsgemäß ist es jedoch besonders bevorzugt, dass die Klemmelemente kugelförmig ausgebildet sind. Die kugelförmige Ausbildung der Klemmelemente und die Verwendung von mehreren separaten Klemmelementen ermöglicht eine definierte radiale Positionierung der Klemmelemente, ohne dass eine elastische Verformung erforderlich ist. Die Klemmelemente können exakt in einer radialen Richtung zur Durchführung des Klemmvorgangs positioniert werden. Durch die kugelförmige Kontur wird ein einfaches Abgleiten an den zugeordneten Gleitflächen unterstützt. Darüber hinaus können die Klemmkräfte jeweils lokal begrenzt in den Bereich einer Innenbegrenzung der Mündungsabschnitte des Vorformlings oder Behälters bzw. des Kopfendbereichs eingebracht werden.

Das Kopfteil bzw. das Schaftteil weisen in bevorzugten Ausführungsformen jeweils mindestens zwei Klemmelemente auf, vorzugsweise mindestens vier, stärker bevorzugt mindestens sechs Klemmelemente. Die Klemmelemente sind jeweils entlang eines Außenumfangs relativ zueinander mit einem Abstand angeordnet. In einer bevorzugten Ausführungsform sind die Abstände zwischen den um den Außenumfang angeordneten Klemmelementen jeweils dieselben. Die Klemmelemente können sich vorteilhafterweise dabei jeweils gegenüberliegen. In einer Ausführungsform weisen das Kopfteil bzw. das Schaftteil daher eine gerade Zahl von Klemmelementen entlang eines Außenumfangs auf.

Die Vertiefungen sind bevorzugt als Aussparungen in der Außenseite der entsprechenden Teile (des Kopfteils und/oder des Schaftteils) ausgebildet. Der Durchmesser der Vertiefung an der Außenseite des Teils wird vorteilhafterweise geringer als der maximale Durchmesser der Klemmelemente, insbesondere die kugelförmigen Klemmelemente, sein. Auf diese Weise wird ein Herausfallen der Klemmelemente aus den Vertiefungen verhindert. Gleichzeitig ist der Durchmesser der Vertiefung in der Außenseite des Teils groß genug um zu gewährleisten, dass das Klemmelement sich aus Richtung der Mittelachse des Teils über den Außenumfang des Teils hinaus bewegen kann, um den jeweiligen Mündungsabschnitt festzuklemmen.

Die Vertiefung kann schräg zur Längsachse obere und untere Gleitflächen zur Beaufschlagung des jeweiligen Klemmelementes aufweisen. Hierbei ist jeweils eine der Gleitflächen an dem betreffenden Teil (dem Kopfteil bzw. dem Schaftteil) ausgebildet und die andere an dem zugehörigen mobilen Element (Kopfinnenteil bzw. Schaftinnenteil). Die jeweilige Gleitfläche kann dabei z. B. relativ zur Längsachse einen Winkel von 10° bis 80°, vorzugsweise von 20° bis 70°, stärker bevorzugt von 30 bis 60°, z. B. etwa 45° aufweisen.

Ein Transport der Vorformlinge bzw. Behälter ohne Durchführung von Wendevorgängen wird dadurch unterstützt, dass die Vorformlinge mindestens entlang eines Teiles ihres Transportweges vom Tragelement mit ihren Mündungsabschnitten in lotrechter Richtung nach oben orientiert transportiert werden.

In einem weiteren Aspekt betrifft die Erfindung eine Vorrichtung zur blasformenden Herstellung von Fertigbehältern aus Vorformlingen, insbesondere aus Vorformlingen aus einem thermoplastischen Material, mit wenigstens einer Heizeinrichtung zum thermischen Konditionieren der Vorformlinge entlang einer Transportstrecke und mit mindestens einer Umformeinrichtung zum Umformen thermisch konditionierter Vorformlinge in den Fertigbehälter, dadurch gekennzeichnet, dass die Vorrichtung mindestens ein erfindungsgemäßes Transportsystem zum Transport der Vorformlinge aufweist, wobei das Transportsystem insbesondere im Bereich der Heizeinrichtung angeordnet ist.

In noch einem weiteren Aspekt betrifft die Erfindung eine Verwendung eines erfindungsgemäßen Transportsystems in einer Vorrichtung zur blasformenden Herstellung von Fertigbehältern aus Vorformlingen, insbesondere aus Vorformlingen aus einem thermoplastischen Material, mit wenigstens einer Heizeinrichtung zum thermischen Konditionieren der Vorformlinge entlang einer Transportstrecke und mit mindestens einer Umformeinrichtung zum Umformen thermisch konditionierter Vorformlinge in den Fertigbehälter, wobei die Verwendung insbesondere im Bereich der Heizeinrichtung erfolgt.

Schließlich betrifft die Erfindung in einem weiteren Aspekt auch ein Verfahren zum Auswechseln von mindestens einem Kopfteil eines erfindungsgemäßen Transportsystems, bei dem das Kopfteil des Transportsystems von dem Schaftteil getrennt und durch ein anderes Kopfteil ersetzt wird.

### Kurze Beschreibung der Figuren

In Verbindung mit den nachfolgenden Figuren soll die Erfindung näher erläutert werden anhand von Ausführungsbeispielen der Erfindung. Es zeigen:
- Fig. 1: Eine perspektivische Darstellung einer Blasstation zur Herstellung von Behältern aus Vorformlingen;
- Fig. 2: einen Längsschnitt durch eine Blasform, in der ein Vorformling gereckt und expandiert wird;
- Fig. 3: eine Skizze zur Veranschaulichung eines grundsätzlichen Aufbaus einer Vorrichtung zur Blasformung von Behältern;
- Fig. 4: eine modifizierte Heizstrecke mit vergrößerter Heizkapazität;
- Fig. 5: drei Vertikalschnitte eines erfindungsgemäßen Tragelements, in denen (links) Vorformling und Kopfteil an dem Schaftteil gehalten werden, (Mitte) der Vorformling gelöst ist und das Kopfteil an dem Schaftteil gehalten wird und (rechts) das Kopfteil mitsamt des Vorformlings von dem Schaftteil gelöst ist;
- Fig. 6: zwei Vertikalschnitte weiterer Ausführungsformen eines erfindungsgemäßen Tragelements, in denen Vorformling und Kopfteil an dem Schaftteil gehalten werden und (links) Schaftinnenrohr / die Schaftklemmelemente und Schaftstab / die Kopfklemmelemente unabhängig voneinander betätigt werden bzw. (rechts) in der bei Überschreiten eines durch den Schaftstab ausgeübten Schwellenwerthubs der Schaftstab in das Schaftinnenrohr eingreift und somit sukzessive erst die Kopfklemmelemente und bei Überschreiten des Schwellenwerthubs die Schaftklemmelemente betätigt werden; und
- Fig. 7: zwei Seitenansichten eines erfindungsgemäßen Tragelements, in denen (links) Vorformling und Kopfteil an dem Schaftteil gehalten werden und (rechts) das Kopfteil mitsamt des Vorformlings von dem Schaftteil gelöst ist.

### Ausführungsbeispiele

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Allerdings ist die Erfindung nicht auf diese Ausführungsbeispiele beschränkt.

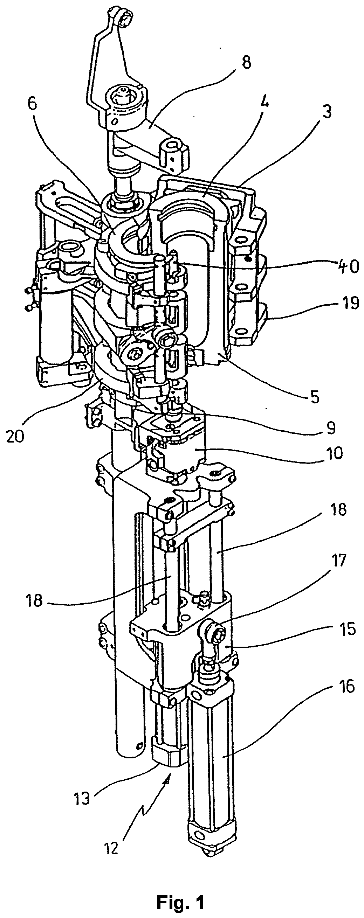

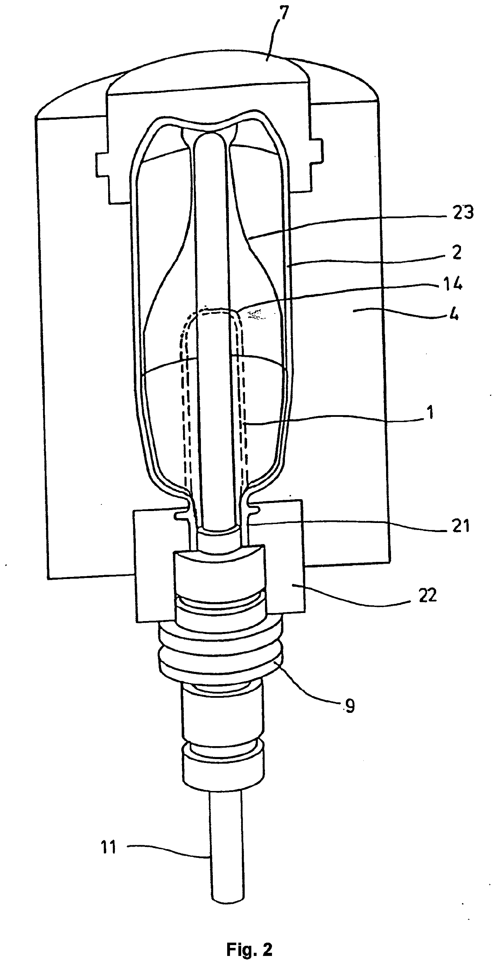

Der prinzipielle Aufbau einer Vorrichtung zur Umformung von Vorformlingen (1) in Behälter (2) ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters (2) besteht im Wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Halteelement (9) fixiert sein. Es ist beispielsweise möglich, den Vorformling (1) über Zangen oder andere Handhabungsmittel direkt in die Blasform (4) einzusetzen.

Zur Ermöglichung einer Druckluftzuleitung ist unterhalb der Blasform (4) ein Anschlusskolben (10) angeordnet, der dem Vorformling (1) Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad (25) angeordnet sind.

Bei der in Fig. 1 dargestellten Ausführungsform ist das Recksystem derart ausgebildet, dass eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

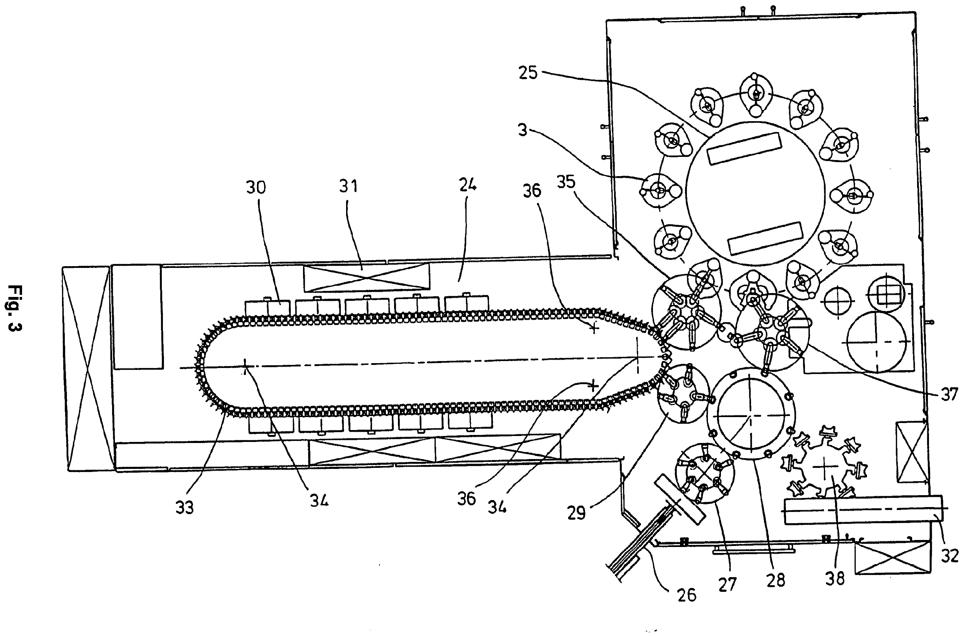

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese von einem Übergaberad (35) an das Blasrad (25) übergeben, in dessen Bereich die Blasstationen (3) angeordnet sind. Die fertig geblasenen Behälter (2) werden von weiteren Übergaberädern (37, 28, 38) einer Ausgabestrecke (32) zugeführt. Das Übergaberad (37) ist dabei als ein Entnahmerad das Übergaberad (38) als ein Ausgaberad ausgebildet.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) aus einer Vielzahl umlaufender Transportelemente (33) ausgebildet ist, die kettenartig aneinandergereiht und entlang von Umlenkrädern (34, 36) geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Übergaberad (27) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (27) und des Blasrades (25) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (27) und zum Blasrad (25). Alternativ zur Verwendung von kettenartigen Transportelementen (33) ist es beispielsweise auch möglich, ein rotierendes Heizrad zu verwenden.

Nach einem fertigen Blasen der Behälter (2) werden diese vom Übergaberad (38) aus dem Bereich der Blasstationen (3) herausgeführt und zur Ausgabestrecke (32) transportiert.

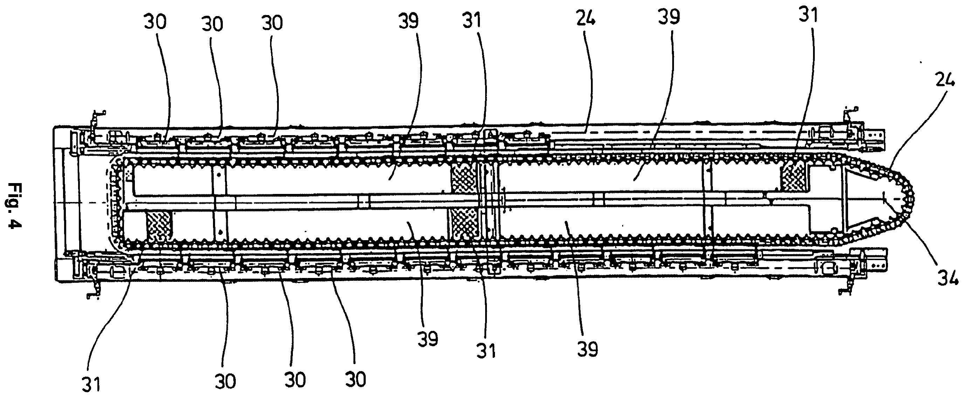

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

Ein Transport der Vorformlinge (1) und der Behälter (2) durch die Blasmaschine kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsabschnitt des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe (26) mit seiner Mündung in lotrechter Richtung nach oben orientiert zugeführt, anschließend gedreht, entlang der Heizstrecke (24) und des Blasrades (25) mit seiner Mündung in lotrechter Richtung nach unten orientiert gefördert und vor einem Erreichen der Ausgabestrecke (32) wieder gedreht. Gemäß einer anderen Variante wird der Vorformling (2) im Bereich der Heizstrecke (24) mit seiner Mündung in lotrechter Richtung nach unten orientiert beheizt, vor Erreichen des Blasrades (25) jedoch wieder um 180° gedreht.

Gemäß einer dritten Ausführungsvariante durchläuft der Vorformling den gesamten Bereich der Blasmaschine ohne Durchführung von Wendevorgängen mit seiner Mündung in lotrechter Richtung nach oben orientiert.

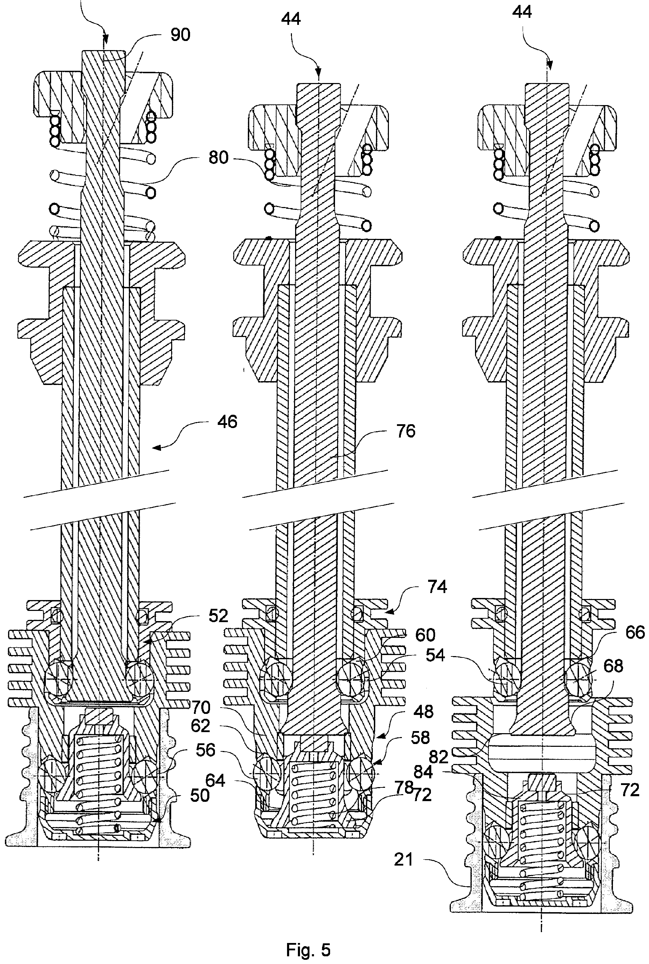

Fig. 5 zeigt in drei Längs-Vertikalschnitten die Positionierung des Kopfteils (48) innerhalb eines Mündungsabschnittes (21) eines Vorformlings (1) oder eines Behälters (2) sowie die Positionierung des Schaftteils (46) bzw. des Schaftendbereichs (52) innerhalb des Kopfteils (48).

Die drei Abbildungen (links, Mitte, rechts) zeigen das Tragelement (44) in drei verschiedenen Stadien, wobei (links) Vorformling (1) / Behälter (2) und Kopfteil (48) an dem Schaftteil (46) gehalten werden, (Mitte) der Vorformling (1) / Behälter (2) gelöst ist und das Kopfteil (48) an dem Schaftteil (46) gehalten wird und (rechts) das Kopfteil (48) mitsamt des Vorformlings (1) / Behälters (2) von dem Schaftteil (52) gelöst ist.

Das Tragelement (44) weist jeweils einen Schaftteil (46) und einen Kopfteil (48) auf, wobei Kopfteil (48) und Schaftteil (46) in der linken und der mittleren Abbildung miteinander (trennbar) verbunden sind. Das Schaftteil (46) mit dem Kopfteil (48) ist relativ zu einer nicht dargestellten Elementbasis in Richtung einer nicht dargestellten Elementlängsachse beweglich. Gemäß einem typischen Ausführungsbeispiel können eine Mehrzahl von Tragelementen (44), z. B. über die Elementbasen, kettenartig miteinander verbunden werden oder mit einer umlaufenden Transportkette verbunden werden. Das Tragelement (44) kann aber auch an umlaufenden Übergaberädern oder sonstigen Einrichtungen angebracht sein.

Es ist zu erkennen, dass das Kopfteil (48) Vertiefungen (58) aufweist, in denen Kopfklemmelemente (56) angeordnet sind. Die Vertiefungen (58) sind in dem in den Mündungsabschnitt (21) des Vorformlings (1) einführbaren Kopfendbereich (50) angeordnet und jeweils bezüglich einer Längsachse (90) des Tragelementes (44) seitlich am Kopfteil (48) angeordnet. Die Vertiefungen (58) umfassen jeweils ein Kopfklemmelement (56), das in dem gezeigten Ausführungsbeispiel gerundet ausgebildet ist und vorzugsweise eine Kugelform aufweist.

Das gezeigte Kopfteil (48) weist sechs Kopfklemmelemente (56) auf, von denen zwei in den gezeigten Vertikalschnitten sichtbar sind. Die Kopfklemmelemente (56) sind entlang des Außenumfangs des Kopfendbereichs (50) relativ zueinander mit einem Abstand angeordnet. Vorzugsweise ist der Abstand zwischen den Kopfklemmelementen (56) einheitlich, d. h. alle Kopfklemmelemente (56) weisen jeweils den gleichen Abstand zu ihren benachbarten Kopfklemmelementen (56) auf.

Die Vertiefung (58) weist schräg zur Längsachse (90) verlaufende obere und untere Gleitflächen (62, 64) zur Beaufschlagung des Kopfklemmelementes (56) auf. Insbesondere weist das Kopfteil (48) ein mit der oberen Gleitfläche (62) versehenes Kopfoberteil (70) und ein mit der unteren Gleitfläche (64) versehenes Kopfinnenteil (72) auf. Wie dargestellt kann die obere Gleitfläche (62) Teil einer V-förmigen Ausbuchtung innerhalb der Vertiefung (58) sein. Eine solche hält das Kopfklemmelement (56) effektiv innerhalb der Vertiefung (58) und erlaubt doch das Verschieben des Kopfklemmelementes (56) z. B. orthogonal zur Längsachse (90) beim Lösen bzw. Feststellen des Kopfklemmelementes (56). Die untere Gleitfläche (64) ist bevorzugt an Kopfinnenteil (72) angeordnet. Das Kopfinnenteil (72) ist weiter bevorzugt innerhalb des Kopfteils (48) entlang der Längsachse (90) verschiebbar. Durch diese Verschiebungsbewegung in Richtung des dem Kopfteil entgegengesetzten Endes des Tragelements wird die untere Gleitfläche (64) mit dem Kopfklemmelement (56) in Kontakt gebracht und/oder das Kopfklemmelement (56) gleitet entlang der unteren Gleitfläche innerhalb der Vertiefung (58) weiter aus der Mitte des Kopfteils (48) nach außen. Durch diese Bewegung wird ein Innendruck auf einen an dem Kopfteil (48) positionierten Mündungsabschnitt (21) ausgeübt, so dass der Mündungsabschnitt (21) am Kopfteil (48) fest verklemmt wird.

In dem dargestellten Ausführungsbeispiel wird das Kopfinnenteil (72) durch ein stößelförmiges Schaftinnenteil (76) betätigt. Wird das Schaftinnenteil (76) in Richtung des Kopfinnenteils (72) entlang der Längsachse (90) bewegt, so drückt die Endfläche (82) des Schaftinnenteils (76) auf das Kopfinnenteil (72) entgegen der Federkraft der als Druckfeder ausgebildeten Kopfteil-Feder (78). Diese Kopfteil-Feder (78) verspannt das Kopfoberteil (70) und das Kopfinnenteil (72) relativ zueinander. Das Kopfinnenteil (72) ist im dargestellten Beispiel glockenförmig ausgebildet. Im Inneren der Glockenform ist die Kopfteil-Feder (78) angeordnet. Durch einen ausreichenden Druck mit dem Schaftinnenteil (76) auf das Kopfinnenteil (72) wird der durch die untere Gleitfläche (64) auf das Kopfklemmelement (56) ausgeübte Druck verringert oder aufgehoben und das Kopfklemmelement (56) bewegt sich stärker in Richtung des Inneren des Kopfteils (48) und/oder der durch das Kopfklemmelement (56) auf den Mündungsabschnitt (21) ausgeübte Klemmdruck verringert sich (Figur 5, Mitte). Der auf den Mündungsabschnitt (21) ausgeübte Innendruck / Klemmdruck wird jeweils reduziert, so dass der Vorformling (1) bzw. der Behälter (2) von dem Tragelement (44) abgenommen werden kann oder abfällt.

Das Schaftinnenteil (76) kann durch Druckausübung auf sein dem Kopfteil (48) gegenüberliegendes Ende in Richtung der Längsachse (90) betätigt werden. Andere Betätigungsmechanismen sind ebenfalls denkbar. Durch Betätigung des Schaftinnenteils (76) werden die kugelförmig ausgebildeten Kopfklemmelemente (56) entriegelt, d. h. gelöst und in Richtung des Kopfteilinneren verschoben. Das Tragelement (44) wird aufgrund dieses aktiven Betätigungsmechanismus auch als Aktivdorn bezeichnet.

Es ist zu erkennen, dass das Schaftteil (46) in einem in den Mündungsabschnitt des Kopfteils (48) einführbaren Schaftendbereich (52) Vertiefungen (60) aufweist, in denen Schaftklemmelemente (54) angeordnet sind. Die Vertiefungen (60) sind in dem in den Mündungsabschnitt des Kopfteils (48) einführbaren Schaftendbereich (52) angeordnet und jeweils bezüglich einer Längsachse (90) des Tragelementes (44) seitlich am Schaftteil (46) angeordnet. Die Vertiefungen (60) umfassen jeweils ein Schaftklemmelement (54), das in dem gezeigten Ausführungsbeispiel gerundet ausgebildet ist und vorzugsweise eine Kugelform aufweist.

Das gezeigte Schaftteil (46) weist sechs Schaftklemmelemente (54) auf, von denen zwei in den gezeigten Vertikalschnitten sichtbar sind. Die Schaftklemmelemente (54) sind entlang des Außenumfangs des Schaftendbereichs (52) relativ zueinander mit einem Abstand angeordnet. Vorzugsweise ist der Abstand zwischen den Schaftklemmelementen (54) einheitlich, d. h. alle Schaftklemmelemente (54) weisen jeweils den gleichen Abstand zu ihren benachbarten Schaftklemmelementen (54) auf.

Die Vertiefung (60) weist schräg zur Längsachse (90) verlaufende obere und untere Gleitflächen (66, 68) zur Beaufschlagung des Schaftklemmelementes (54) auf. Insbesondere weist das Schaftteil (46) ein mit der oberen Gleitfläche (66) versehenes Schaftendbereichoberteil (74) und ein mit der unteren Gleitfläche (68) versehenes Schaftinnenteil (76) auf. Wie dargestellt kann die obere Gleitfläche (66) Teil einer V-förmigen Ausbuchtung innerhalb der Vertiefung (60) sein. Eine solche hält das Schaftklemmelement (54) effektiv innerhalb der Vertiefung (60) und erlaubt doch das Verschieben des Schaftklemmelementes (54) orthogonal zur Längsachse (90) beim Lösen bzw. Feststellen des Schaftklemmelementes (54). Die untere Gleitfläche (68) ist bevorzugt am Schaftinnenteil (76) angeordnet. Das Schaftinnenteil (76) ist bevorzugt innerhalb des Schaftteils (46) entlang der Längsachse (90) des Schaftes verschiebbar. Durch diese Verschiebungsbewegung in Richtung des dem Kopfteil entgegengesetzten Endes des Tragelements (44) wird die untere Gleitfläche (68) mit dem Schaftklemmelement (54) in Kontakt gebracht und/oder das Schaftklemmelement (54) gleitet entlang der unteren Gleitfläche (68) innerhalb der Vertiefung (60) weiter aus der Mitte des Schaftteils (46) nach außen. Durch diese Bewegung wird ein Innendruck auf ein an dem Schaftteil (46) positioniertes Kopfteil (48), insbesondere das Kopfoberteil (70) ausgeübt, so dass das Kopfteil (48) am Schaftteil (46) fest verklemmt wird.

In dem dargestellten Ausführungsbeispiel wird das Schaftinnenteil (76) ebenso wie das Kopfinnenteil (72) durch ein stößelförmiges Schaftinnenteil (76) betätigt, d. h. beide Gruppen von Klemmelementen werden durch den gleichen Betätigungsmechanismus, d. h. durch dasselbe Schaftinnenteil (76), betätigt. Wird das Schaftinnenteil (76) in Richtung des Kopfinnenteils (72) entlang der Längsachse (90) bewegt, so wird der durch die untere Gleitfläche (68) auf das Schaftklemmelement (54) ausgeübte Druck verringert oder aufgehoben und das Schaftklemmelement (54) bewegt sich stärker in Richtung des Inneren des Schaftteils (46) und/oder der durch das Schaftklemmelement (54) auf den Mündungsabschnitt des Kopfteils (48) ausgeübte Klemmdruck verringert sich (Figur 5, rechts). Der auf das Innere des Kopfteils (48) ausgeübte Innendruck / Klemmdruck wird reduziert, so dass das Kopfteil (48) von dem Tragelement (44) abgenommen werden kann oder abfällt. Durch Betätigung des Schaftinnenteils (76) werden die kugelförmig ausgebildeten Schaftklemmelemente (54) entriegelt, d. h. gelöst und in Richtung des Schaftteilinneren verschoben.

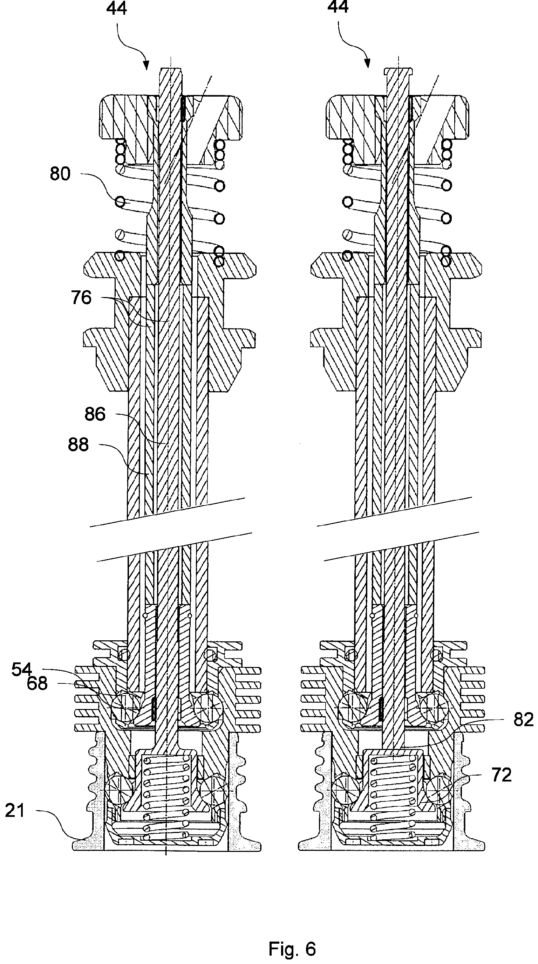

Fig. 6 zeigt in zwei Vertikalschnitten weitere Ausführungsformen eines erfindungsgemäßen Tragelements (44). Im Unterschied zu den in Fig. 5 gezeigten Ausführungsformen werden in den hier gezeigten Ausführungsformen Schaftinnenrohr (88) (und damit die Schaftklemmelemente (54)) und Schaftstab (86) (und damit die Kopfklemmelemente (56)) unabhängig voneinander betätigt. Durch die unabhängige Betätigung wird ein fortgesetzt starker Halt des Kopfteils (48) gewährleistet, nachdem die Kopfklemmelemente (56) gelöst und der Vorformling (1) bzw. der Behälter (2) von dem Kopfteil (48) abgenommen wurden.

In diesen Ausführungsformen umfasst das Schaftinnenteil (76) einen Schaftstab (86) und ein den Schaftstab (86) wenigstens bereichsweise umgebendes Schaftinnenrohr (88). Der Schaftstab (86) ist in den gezeigten Ausführungsformen jeweils stab- bzw. stößelförmig ausgebildet. Alternativ kann der Schaftstab (86) jedoch auch z. B. eine Hohlzylinderform aufweisen. Der Schaftstab (86) und das Schaftinnenrohr (88) erstrecken sich beide durch die Schaftteil-Feder (80) hindurch. Der Schaftstab (86) ist mit dem Kopfinnenteil (72) verbunden. Dabei können Schaftstab (86) und Kopfinnenteil (72) einteilig (links) oder mehrteilig (rechts) ausgebildet sein. Mit anderen Worten ist die Endfläche (82) des Schaftstabes (86) an dem Kopfinnenteil (72) angebracht. Auf diese Weise können Schaftstab (86) und Kopfinnenteil (72) Zug- und Druckkräfte aufeinander ausüben. Eine Betätigung des Schaftstabs (86) verschiebt auch das Kopfinnenteil (72) in Richtung des den Mündungsabschnitt (21) haltenden Endes des Tragelements (44). Das Kopfinnenteil (72) bzw. dessen untere Gleitfläche (64) werden durch die Betätigung gelöst bzw. entriegelt. Dabei wird das Kopfinnenteil (72) entgegen der Federkraft der Kopfteil-Feder (78) verschoben. Durch die Entriegelung des Kopfinnenteils (72) bzw. dessen unterer Gleitfläche (64) werden auch die Kopfklemmelemente (56) entriegelt. Die Kopfklemmelemente (56) gleiten entlang der unteren Gleitfläche (64) mehr in das Innere des Schaftteils (46). Dabei wird der auf den Mündungsabschnitt (21) ausgeübte Innendruck gelöst, so dass der Vorformling (1) oder Behälter (2) abgenommen werden kann.

Der Schaftstab (86) wird durch Druckausübung auf den Schaftstab (86) von dem dem Kopfteil (48) gegenüberliegenden Ende des Tragelements (44) betätigt. Ebenso kann separat durch Druckausübung auf das Schaftinnenrohr (88) von dem dem Kopfteil (48) gegenüberliegenden Ende des Tragelements (44) das Schaftinnenrohr (88) betätigt werden (Fig. 6, linke Seite). In einer noch weiterentwickelteren Ausführungsform kann das Schaftinnenrohr (88) betätigt werden durch Überschreiten eines durch den Schaftstab (86) ausgeübten Schwellenwerthubs, ab dem der Schaftstab (86) in das Schaftinnenrohr (88) eingreift (Fig. 6, rechte Seite). Durch das Eingreifen des Schaftstabs (86) in das Schaftinnenrohr (88) wird das Schaftinnenrohr (88) mittels des Schaftstabs (86) betätigt. Auf diese Weise (Fig. 6, rechte Seite) werden sukzessive erst die Kopfklemmelemente (56) und bei Überschreiten des Schwellenwerthubs auch die Schaftklemmelemente (58) betätigt bzw. entriegelt.

Das Schaftinnenrohr (88) ist in den gezeigten Ausführungsformen jeweils hohlzylinderförmig ausgebildet. Das Schaftinnenrohr (88) erstreckt sich um den Schaftstab (86) herum, d. h. der Schaftstab (86) erstreckt sich durch das Schaftinnenrohr (88) hindurch. Das Schaftinnenrohr (88) weist an seinem dem Kopfteil (48) zugewandten Ende eine stößelartige Form auf. An dem dem Kopfteil (48) zugewandten Ende weist das Schaftinnenrohr (88) untere Gleitflächen (68) auf. Eine Betätigung des Schaftinnenrohrs (88) verschiebt die unteren Gleitflächen (68) in Richtung des den Mündungsabschnitt (21) haltenden Endes des Tragelements (44). Die unteren Gleitflächen (68) werden durch die Betätigung gelöst bzw. entriegelt. Durch die Entriegelung der unteren Gleitflächen (68) werden auch die Schaftklemmelemente (54) entriegelt. Die Schaftklemmelemente (54) gleiten entlang der unteren Gleitflächen (68) mehr in das Innere des Schaftteils (46). Dabei wird der auf den in den Mündungsabschnitt des Kopfteils (48) ausgeübte Innendruck gelöst, so dass das Kopfteil (48) abgenommen werden kann.

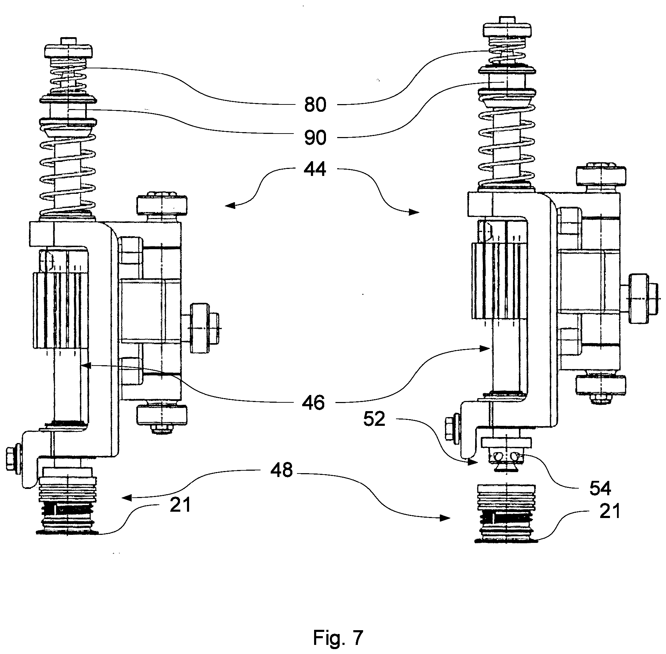

Fig. 7 zeigt zwei teilweise Darstellungen einer Seitenansicht eines Vorformlings (1), in dessen Mündungsabschnitt (21) bereichsweise ein Tragelement (44) eingeführt ist. Auf der linken Seite ist ein Tragelement (44) dargestellt, bei dem weder die Kopfklemmelemente (56) noch die Schaftklemmelemente (54) entriegelt sind. Somit werden sowohl das Kopfteil (48) als auch der Mündungsabschnitt (21) des Vorformlings (1) fest an dem Tragelement (44) gehalten. Auf der rechten Seite ist ein Tragelement (44) dargestellt, bei dem die Schaftklemmelemente (54) entriegelt sind, so dass das Kopfteil (48) mitsamt des Vorformlings (1) von dem Rest des Tragelements (44), d. h. insbesondere des Schaftteils (46), gelöst werden konnte. Die Entriegelung der Schaftelemente (54) erfolgte durch Betätigung des Schaftinnenteils (76) entgegen der Federkraft der als Druckfeder ausgebildeten Schaftteil-Feder (80). Das Schaftinnenteil (76) erstreckt sich durch die Schaftteil-Feder (80) entlang der Längsachse (90) des Tragelements (44) hindurch.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen der vorgestellten Einzelmerkmale verwirklicht werden können, sofern der Schutzbereich der beigefügten Ansprüche nicht verlassen wird. Die vorliegende Offenbarung schließt sämtliche Kombinationen der vorgestellten Einzelmerkmale ein.

**Bezugszeichenliste**

| | | | |
|---|---|---|---|
| 1 | Vorformling | 23 | Behälterblase |
| 2 | Behälter | 24 | Heizstrecke |
| 3 | Blasstation | 25 | Blasrad |
| 4 | Blasform | 26 | Vorformlingseingabe |
| 5 | erste Formhälfte | 27 | Übergaberad |
| 6 | zweite Formhälfte | 28 | Übergaberad |
| 7 | Bodenteil | 29 | Übergaberad |
| 8 | Hubvorrichtung | 23 | Behälterblase |
| 9 | Transportdorn | 24 | Heizstrecke |
| 10 | Anschlusskolben | 25 | Blasrad |
| 11 | Reckstange | 26 | Vorformlingseingabe |
| 12 | Zylinder | 27 | Übergaberad |
| 13 | Primärzylinder | 28 | Übergaberad |
| 14 | Boden | 29 | Übergaberad |
| 15 | Schlitten | 30 | Heizeinrichtung |
| 16 | Sekundärzylinder | 30' | Heizeinrichtung |
| 17 | Führungsrolle | 31 | Gebläse |
| 18 | Führungselement | 32 | Ausgabestrecke |
| 19 | erster Träger | 33 | Transportmittel |
| 20 | zweiter Träger | 34 | Umlenkrad, Kopfrad |
| 21 | Mündungsabschnitt | 35 | Übergaberad |
| 22 | Gewindeeinsatz | 36 | Umlenkrad |
| 37 | Übergaberad | | |
| 38 | Übergaberad | | |
| 39 | Kühlluftkanäle | | |
| 40 | Verriegelungseinrichtung | | |
| 42 | Transportsystem | | |
| 44 | Tragelement | | |
| 46 | Schaftteil | | |
| 48 | Kopfteil | | |
| 50 | Kopfendbereich | | |
| 52 | Schaftendbereich | | |
| 54 | Schaftklemmelement | | |
| 56 | Kopfklemmelement | | |
| 58 | Vertiefung (Kopfteil) | | |
| 60 | Vertiefung (Schaftteil) | | |
| 62 | obere Gleitfläche (Kopfteil) | | |
| 64 | untere Gleitfläche (Kopfteil) | | |
| 66 | obere Gleitfläche (Schaftteil) | | |
| 68 | untere Gleitfläche (Schaftteil) | | |
| 70 | Kopfoberteil | | |
| 72 | Kopfinnenteil | | |
| 74 | Schaftendbereichoberteil | | |
| 76 | Schaftinnenteil | | |
| 78 | Kopfteil-Feder | | |
| 80 | Schaftteil-Feder | | |
| 82 | Endfläche | | |
| 84 | Endplatte | | |
| 86 | Schaftstab | | |
| 88 | Schaftinnenrohr | | |
| 90 | Längsachse | | |

## Patentansprüche

1. Transportsystem (42) zum Transport von Vorformlingen (1) in einer Vorrichtung zur blasformenden Herstellung von Fertigbehältern, wobei das Transportsystem (42) eine Transportkette umfasst, deren Kettenglieder ein Tragelement (44) zum Transport der Vorformlinge (1) aufweisen, wobei das Tragelement (44) ein Schaftteil (46) und ein Kopfteil (48) umfasst, und das Kopfteil (48) einen in den Mündungsabschnitt des Vorformlings (1) einführbaren Kopfendbereich (50) aufweist, **dadurch gekennzeichnet, dass** das Kopfteil (48) an dem Schaftteil (46) gehalten ist und mittels Betätigung eines ersten Betätigungselementes (92) von dem Schaftteil (46) lösbar ist, wobei das erste Betätigungselement (92) in dem von dem Kopfteil (48) abgewandten Endbereich (94) des Schaftteils (46) angeordnet ist.

2. Transportsystem (42) nach Anspruch 1, **dadurch gekennzeichnet, dass** das Kopfteil (48) mittels der Rückstellkraft einer Schaftteil-Feder (80) an dem Schaftteil (46) gehalten ist.

3. Transportsystem (42) nach einem der Ansprüche 1 bis 2, **dadurch gekennzeichnet, dass** das Schaftteil (46) in einem in einen Mündungsabschnitt (96) des Kopfteils (48) einführbaren Schaftendbereich (52) mindestens zwei positionierbare, gerundet ausgebildete Schaftklemmelemente (54) aufweist, die entlang eines Außenumfangs des Schaftendbereichs (52) relativ zueinander mit einem Abstand angeordnet und mittels Betätigung des ersten Betätigungselements (92) radial aus der Längsachse des Tragelementes (44) verschiebbar sind.

4. Transportsystem (42) nach einem der vorangehenden Ansprüche, **dadurch gekennzeichnet, dass** mindestens eines der Schaftklemmelemente (54) in einer bezüglich einer Längsachse (90) des Tragelementes (44) seitlich am Schaftteil (46) angeordneten Vertiefung (60) positioniert ist, wobei die Vertiefung (60) schräg zur Längsachse (90) verlaufende obere und untere Gleitflächen (66, 68) zur Beaufschlagung des Schaftklemmelementes (54) aufweist und wobei das Schaftteil (46) ein mit der oberen Gleitfläche (66) versehenes Schaftendbereichoberteil (74) und ein mit der unteren Gleitfläche (68) versehenes Schaftinnenteil (76) aufweist, wobei das Schaftendbereichoberteil (74) und das Schaftinnenteil (76) von mindestens einer Schaftteil-Feder (80) relativ zueinander verspannt sind, die das Schaftinnenteil (76) beaufschlagt.

5. Transportsystem (42) nach einem der vorangehenden Ansprüche, **dadurch gekennzeichnet, dass** der Vorformling (1) mittels Betätigung eines zweiten Betätigungselements (98) von dem Kopfteil (48) lösbar ist, wobei das zweite Betätigungselement (98) in dem von dem Kopfteil (48) abgewandten Endbereich des Schaftteils (46) angeordnet ist und/oder von dem ersten Betätigungselement (92) betätigbar ist.

6. Transportsystem (42) nach einem der vorangehenden Ansprüche, **dadurch gekennzeichnet, dass** der Vorformling (1) mittels der Rückstellkraft einer Kopfteil-Feder (78) an dem Kopfteil (48) gehalten ist.

7. Transportsystem (42) nach einem der vorangehenden Ansprüche, **dadurch gekennzeichnet, dass** das Kopfteil (48) in einem in den Mündungsabschnitt (21) des Vorformlings (1) einführbaren Kopfendbereich (50) mindestens zwei positionierbare, gerundet ausgebildete Kopfklemmelemente (56) aufweist, die entlang eines Außenumfangs des Kopfendbereichs (50) relativ zueinander mit einem Abstand angeordnet sind und mittels Betätigung des zweiten Betätigungselements (98) radial aus der Längsachse des Tragelementes (44) verschiebbar sind.

8. Transportsystem (42) nach einem der vorangehenden Ansprüche, **dadurch gekennzeichnet, dass** mindestens eines der Kopfklemmelemente (56) in einer bezüglich einer Längsachse (90) des Tragelementes (44) seitlich am Kopfteil (48) angeordneten Vertiefung (58) positioniert ist, wobei die Vertiefung (58) schräg zur Längsachse (90) verlaufende obere und untere Gleitflächen (62, 64) zur Beaufschlagung des Kopfklemmelementes (56) aufweist und wobei das Kopfteil (48) ein mit der oberen Gleitfläche (62) versehenes Kopfoberteil (70) und ein mit der unteren Gleitfläche (64) versehenes Kopfinnenteil (72) aufweist, wobei das Kopfoberteil (70) und das Kopfinnenteil (72) von mindestens einer Kopfteil-Feder (78) relativ zueinander verspannt sind, die das Kopfinnenteil (72) beaufschlagt.

9. Transportsystem (42) nach einem der vorangehenden Ansprüche, **dadurch gekennzeichnet, dass** das Schaftinnenteil (76) einen Schaftstab (86) und ein den Schaftstab (86) wenigstens bereichsweise umgebendes Schaftinnenrohr (88) umfasst.

10. Vorrichtung zur blasformenden Herstellung von Fertigbehältern aus Vorformlingen (1), insbesondere aus Vorformlingen (1) aus einem thermoplastischen Material, mit wenigstens einer Heizeinrichtung zum thermischen Konditionieren der Vorformlinge (1) entlang einer Transportstrecke und mit mindestens einer Umformeinrichtung zum Umformen thermisch konditionierter Vorformlinge (1) in den Fertigbehälter, **dadurch gekennzeichnet, dass** die Vorrichtung mindestens ein Transportsystem (42) nach einem der Ansprüche 1 bis 9 zum Transport der Vorformlinge (1) aufweist, wobei das Transportsystem (42) insbesondere im Bereich der Heizeinrichtung angeordnet ist.

11. Verwendung eines Transportsystems (42) nach einem der Ansprüche 1 bis 9 in einer Vorrichtung zur blasformenden Herstellung von Fertigbehältern aus Vorformlingen (1), insbesondere aus Vorformlingen (1) aus einem thermoplastischen Material, mit wenigstens einer Heizeinrichtung zum thermischen Konditionieren der Vorformlinge (1) entlang einer Transportstrecke und mit mindestens einer Umformeinrichtung zum Umformen thermisch konditionierter Vorformlinge (1) in den Fertigbehälter, wobei die Verwendung insbesondere im Bereich der Heizeinrichtung erfolgt.

## Claims

1. A transport system (42) for transporting preforms (1) in a device for the blow-moulding production of prefabricated containers, wherein the transport system (42) comprises a transport chain, the chain links of which comprise a support element (44) for transporting the preforms (1), wherein the support element (44) comprises a shaft part (46) and a head part (48), and the head part (48) comprises a head-end region (50) that can be inserted into the orifice portion of the preform (1), **characterized in that** the head part (48) is held on the shaft part (46) and can be detached from the shaft part (46) by means of actuating a first actuating element (92), wherein the first actuating element (92) is arranged in the end region (94) of the shaft part (46) facing away from the head part (48).

2. The transport system (42) according to Claim 1, **characterized in that** the head part (48) is held on the shaft part (46) by means of the resetting force of a shaft-part spring (80).

3. The transport system (42) according to any one of the Claims 1 to 2, **characterized in that,** that, in a shaft-end region (52) that can be inserted into an orifice section (96) of the head part (48), the shaft part (46) comprises at least two positionable rounded shaft clamping elements (54), which are positioned along an outer circumference of the shaft-end region (52) relative to one another at a distance and can be moved radially out of the longitudinal axis of the support element (44) by actuating the first actuating element (92) .

4. The transport system (42) according to one of the preceding claims, **characterized in that** at least one of the shaft clamping elements (54) is positioned in a recess (60) arranged on the side of the shaft part (46) with respect to a longitudinal axis (90) of the support element (44), wherein the recess (60) comprises upper and lower sliding surfaces (66, 68) that run obliquely to the longitudinal axis (90) for impinging the shaft clamping element (54) and wherein the shaft part (46) comprises a shaft-end-region upper part (74) provided with the upper sliding surface (66) and a shaft inner part (76) provided with the lower sliding surface (68), wherein the shaft-end-region upper part (74) and the shaft inner part (76) are tensioned relative to one another by at least one shaft-part spring (80), which impinges the shaft inner part (76).

5. The transport system (42) according to one of the preceding claims, **characterized in that** the preform (1) can be detached from the head part (48) by actuating a second actuating element (98), wherein the second actuating element (98) is arranged in the end region of the shaft part (46) facing away from the head part (48) and/or can be actuated by the first actuating element (92) .

6. The transport system (42) according to one of the preceding claims, **characterized in that** the preform (1) is held on the head part (48) by means of the resetting force of a head-part spring (78).

7. The transport system (42) according to any one of the preceding claims **characterized in that,** that, in a head-end region (50) that can be inserted into an orifice section (21) of the preform (1), the head part (48) comprises at least two positionable rounded head clamping elements (56), which are positioned along an outer circumference of the head-end region (50) relative to one another at a distance and can be moved radially out of the longitudinal axis of the support element (44) by actuating the second actuating element (98).

8. The transport system (42) according to one of the preceding claims, **characterized in that** at least one of the head clamping elements (56) is positioned in a recess (58) arranged on the side of the head part (48) with respect to a longitudinal axis (90) of the support element (44), wherein the recess (58) comprises upper and lower sliding surfaces (62, 64) that run obliquely to the longitudinal axis (90) for impinging the head clamping element (56) and wherein the head part (48) comprises a head upper part (70) provided with the upper sliding surface (62) and a head inner part (72) provided with the lower sliding surface (64), wherein the head upper part (70) and the head inner part (72) are tensioned relative to one another by at least one head-part spring (78), which impinges the head inner part (72) .

9. The transport system (42) according to one of the preceding claims, **characterized in that** the shaft inner part (76) comprises a shaft rod (86) and a shaft inner tube (88) surrounding the shaft rod (86) at least in sections.

10. A device for the blow-moulding production of prefabricated containers from preforms (1), in particular, preforms (1) made of a thermoplastic material, with at least one heating device for heat treatment of the preforms (1) along a transport route and with at least one shaping device for shaping heat-treated preforms (1) into the prefabricated container, **characterized in that** the device comprises at least one transport system (42) according to one of the Claims 1 to 9 for transporting the preforms (1), wherein the transport system (42), in particular, is arranged in the region of the heating device.

11. A use of a transport system (42) according to any one of the Claims 1 to 9, in a device for the blow-moulding production of prefabricated containers from preforms (1), in particular, from preforms (1) made of a thermoplastic material, with at least one heating device for heat treatment of the preforms (1) along a transport route and with at least one shaping device for shaping heat-treated preforms (1) into the prefabricated container, wherein, the use takes place in the region of the heating device in particular.

## Revendications

1. Système de transport (42) pour le transport de préformes (1) dans un dispositif de production de récipients prêts à l'emploi moulés par soufflage, le système de transport (42) comprenant une chaîne de transport dont les chaînons présentent un élément porteur (44) pour le transport des préformes (1), l'élément porteur (44) comportant un corps (46) et une tête (48), et la tête (48) présentant un embout (50) pouvant être introduit dans la section d'embouchure de la préforme (1), **caractérisé en ce que** la tête (48) est maintenue sur le corps (46) et peut être détachée du corps (46) par l'actionnement d'un premier élément d'actionnement (92), le premier élément d'actionnement (92) étant disposé dans la section d'extrémité (94) du corps (46) opposée à la tête (48).

2. Système de transport (42) selon la revendication 1, **caractérisé en ce que** la tête (48) est maintenue au corps (46) au moyen de la force de rappel d'un ressort (80) du corps.

3. Système de transport (42) selon l'une des revendications 1 à 2, **caractérisé en ce que** le corps (46) présente, dans une partie d'extrémité (52) pouvant être introduite dans une section d'embouchure (96) de la tête (48), au moins deux éléments de serrage (54) du corps, ces éléments étant positionnables et de conformation arrondie et agencés avec un certain espacement le long d'une circonférence extérieure de la partie d'extrémité (52) du corps, ces éléments pouvant, par actionnement du premier élément d'actionnement (92), être déportés radialement par rapport à l'axe longitudinal de l'élément porteur (44).

4. Système de transport (42) selon l'une des revendications précédentes, **caractérisé en ce que** l'un au moins des éléments de serrage du (54) corps est positionné dans une cavité (60) du corps (46) disposée latéralement par rapport à un axe longitudinal (90) de l'élément porteur (44), la cavité (60) présentant des surfaces de glissement (66, 68) supérieures et inférieures inclinées par rapport à l'axe longitudinal (90) pour agir sur l'élément de serrage (54) du corps et le corps (46) présentant une partie supérieure (74) de sa partie d'extrémité munie de la surface de glissement (66) supérieure et une partie intérieure (76) munie de la surface de glissement (68) inférieure, la partie supérieure (74) de la partie d'extrémité du corps et la partie intérieure (76) du corps étant serrées l'une par rapport à l'autre par au moins un ressort (80) du corps agissant sur la partie intérieure (76) du corps.

5. Système de transport (42) selon l'une des revendications précédentes, **caractérisé en ce que** la préforme (1) peut être détachée de la tête (48) par l'actionnement d'un second élément d'actionnement (98), le second élément d'actionnement (98) étant disposé dans la section d'extrémité du corps (46) opposée à la tête (48) et/ou pouvant être actionné par le premier élément d'actionnement (92).

6. Système de transport (42) selon l'une des revendications précédentes, **caractérisé en ce que** la préforme (1) est maintenue à la tête (48) au moyen de la force de rappel d'un ressort (78) de la tête.

7. Système de transport (42) selon l'une des revendications précédentes, **caractérisé en ce que** la tête (48) présente, dans une partie d'extrémité (50) pouvant être introduite dans une section d'embouchure (21) de la préforme (1), au moins deux éléments de serrage (56) de la tête, ces éléments étant positionnables et de conformation arrondie et agencés avec un certain espacement le long d'une circonférence extérieure de la partie d'extrémité (50) de la tête, ces éléments pouvant, par actionnement du second élément d'actionnement (98), être déportés radialement par rapport à l'axe longitudinal de l'élément porteur (44).

8. Système de transport (42) selon l'une des revendications précédentes, **caractérisé en ce que** l'un au moins des éléments de serrage de (56) la tête est positionné dans une cavité (58) de la tête (48) disposée latéralement par rapport à un axe longitudinal (90) de l'élément porteur (44), la cavité (58) présentant des surfaces de glissement (62, 64) supérieures et inférieures inclinées par rapport à l'axe longitudinal (90) pour agir sur l'élément de serrage (56) de la tête et la tête (48) présentant une partie supérieure (70) munie de la surface de glissement (62) supérieure et une partie intérieure (72) munie de la surface de glissement (64) inférieure, la partie supérieure (70) et la partie intérieure (72) de la tête étant serrées l'un par rapport à l'autre par au moins un ressort (78) de la tête agissant sur la partie intérieure (72) de la tête.

9. Système de transport (42) selon l'une des revendications précédentes, **caractérisé en ce que** la partie intérieure (76) du corps comprend une tige (86) et un tube intérieur (88) entourant au moins par endroits la tige (86).

10. Dispositif de production par moulage par soufflage de récipients prêts à l'emploi à partir de préformes (1), notamment à partir de préformes (1) en un matériau thermoplastique, avec au moins un dispositif de chauffage pour le conditionnement thermique des préformes (1) le long d'un parcours de transport, et avec au moins un dispositif de formage pour la transformation des préformes (1) thermiquement conditionnée en récipient prêt à l'emploi, **caractérisé en ce que** le dispositif présente au moins un système de transport (42) selon l'une des revendications 1 à 9 pour le transport des préformes (1), le système de transport (42) étant notamment agencé dans la zone du dispositif de chauffage.

11. Utilisation d'un système de transport (42) selon l'une des revendications 1 à 9 dans un dispositif de production par moulage par soufflage de récipients prêts à l'emploi à partir de préformes (1), notamment à partir de préformes (1) en un matériau thermoplastique, avec au moins un dispositif de chauffage pour le conditionnement thermique des préformes (1) le long d'un parcours de transport, et avec au moins un dispositif de formage pour la transformation des préformes (1) thermiquement conditionnée en récipient prêt à l'emploi, l'utilisation ayant notamment lieu dans la zone du dispositif de chauffage.
